# EUROPÄISCHE PATENTANMELDUNG

(11) **EP 1 136 960 A1**
(43) Veröffentlichungstag der Anmeldung: **26.09.2001**
(21) Anmeldenummer: 00106475.7
(22) Anmeldetag: 24.03.2000
(51) Int. Cl.: G07F 7/10, G07F 7/08, B42D 15/10, G06K 19/10

(54) **Individualanordnung**

(71) Anmelder: Infineon Technologies AG, 81669 München (DE)
(72) Erfinder: Kux, Andreas, Dr., Dipl.-Phys, 85540 Haar (DE); Palm, Herbert, Dr., Dipl.-Phys., 85635 Höhenkirchen (DE)
(74) Vertreter: Hermann, Uwe, Dipl.-Ing.

(57) **Zusammenfassung**

Es ist eine Individualanordnung mit einem Aufbau vorgesehen, der zumindest aus einer ersten Struktur und einer zweiten Struktur besteht, die zueinander ausgerichtet sind. Es ist eine Lageerfassungseinrichtung vorgesehen, die eine Relativlage der ersten Struktur zur zweiten Struktur erfaßt, um festzustellen, daß eine Manipulation an der Anordnung vorgenommen wurde.

## Beschreibung

Die Erfindung betrifft eine Individualanordnung gemäß Patentanspruch 1.

Insbesondere für elektronischen Zahlungsverkehr, elektronische Authentifizierung und dergleichen besteht in zunehmendem Maße das Bedürfnis sichere, das heißt nicht manipulierte bzw. nicht manipulierbare Bauelemente zu verwenden. Darunter ist beispielsweise zu verstehen, Paßwörter, Schlüsselwörter oder dergleichen, die in Bauelementen abgespeichert sind zu schützen. Es soll jedoch auch verhindert werden, daß Verfahrensweisen, die auf den Bauelementen ablaufen manipuliert werden. Bei dem Versuch eine solche Manipulation zu umgehen, kommt es häufig vor, daß das Bauelement beschädigt wird und durch ein neues ungeschütztes Bauelement ersetzt wird bzw. nach der Manipulation für den Betrieb repariert wird. Aus diesem Grunde ist es notwendig, zum einen ein Bauelement zu individualisieren, d.h. sicherzustellen, daß jedes Bauelement einzigartig ist und zum anderen zu verhindern, daß ein beschädigtes Bauelement wieder repariert werden kann. Eine derartige Beschädigung liegt häufig darin, daß Kontakte d.h. bei Bauelementen Metallisierungsebenen beseitigt werden, um an darunter liegende geschützte Informationen im Bauelement zu gelangen.

Der Erfindung liegt somit die Aufgabe zugrunde, eine Individualanordnung vorzusehen, bei der mit einfachen Mitteln die Individualität erhalten bleibt und bei einer Beschädigung diese nicht reparierbar ist.

Diese Aufgabe wird erfindungsgemäß mit den im Patentanspruch 1 angegebenen Maßnahmen gelöst.
Dadurch, daß auch bei höchster Präzision bei der Herstellung von mikroelektronischen Bauelementen stets eine Abweichung von vorgesehener Positionierung erfolgt, und eine solche Abweichung in der Regel zufällig ist, kann durch die Bestimmung der Relativlage der ersten Struktur zur zweiten Struktur mittels der Lageerfassungseinrichtung eine Individualität festgestellt werden. Dadurch, daß wenn für eine Untersuchung des Bauelements die erste oder die zweite Struktur oder auch beide entfernt werden müssen, ist es anschließend nicht mehr möglich die gleiche Individualität herzustellen.

Weitere vorteilhafte Ausgestaltungen der Erfindung sind in den Unteransprüchen angegeben. Dadurch, daß eine Lagespeichereinrichtung in der Individualanordnung vorgesehen ist, kann auf der Individualanordnung mittels Vergleich zwischen der gespeicherten Lageinformation und der tatsächlich erfaßten Lageinformation festgestellt werden, ob Manipulationen an der Anordnung vorgenommen wurden. Durch das Vorsehen von Metallkontakten als erste und zweite Struktur ist es möglich, das Entfernen von Metallisierungschichten am Bauelement, oder auch das Trennen zweier übereinander liegender Bauelemente festzustellen.

Nachfolgend wird die Erfindung unter Bezugnahme auf die Zeichnung anhand von Ausführungsbeispielen im einzelnen erläutert.

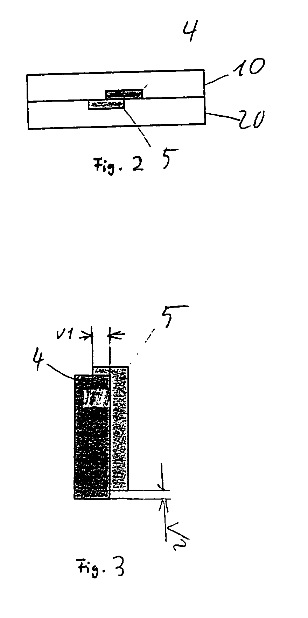

Es zeigen:
Fig. 1,
   eine erfindungsgemäße Individualanordnung im Blockschaltbild,
Fig. 2,
   eine erste Struktur 4 und eine zweite Struktur 5 der erfindungsgemäßen Individualanordnung im Querschnitt,
Fig. 3,
   die Anordnung gemäß Fig. 2 in der Draufsicht,
Fig. 4,
   zeigt eine zweite Ausgestaltung der ersten Struktur 4 und der zweiten Struktur 5 in einer erfindungsgemäßen Individualanordnung,
Fig. 5,
   noch eine weitere Ausgestaltung der Anordnung von der ersten Struktur 4 und der zweiten Struktur 5 einer erfindungsgemäßen Individualanordnung und
Fig. 6,
   ein zweites Ausführungsbeispiel der erfindungsgemäßen Indiviudalanordnung.

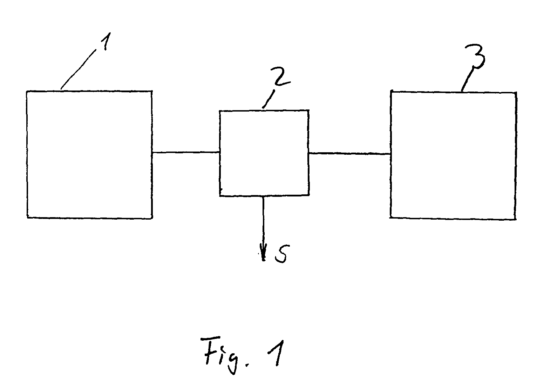

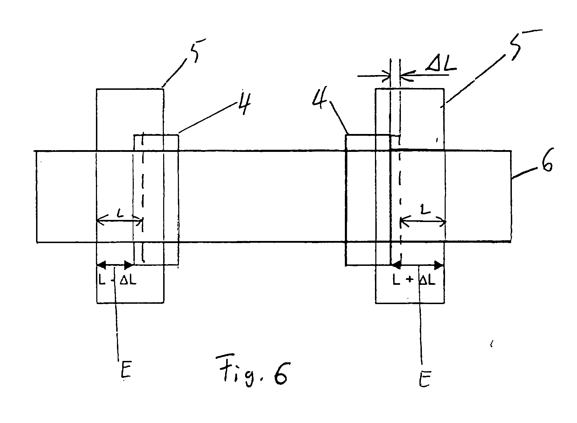

Im ersten Ausführungsbeispiel gemäß Fig. 1 ist ein Aufbau vorgesehen, in dem eine erste Struktur 4 und eine zweite Struktur 5 vorgesehen ist, wie sie beispielsweise in den Fig. 2 bis Fig. 6 dargestellt sind. Mit einer Lageerfassungseinrichtung 2 ist die Lageinformation, d.h. die Relativlage zwischen der ersten Struktur 4 zur zweiten Struktur 5 erfaßbar. In einer Lagespeichereinrichtung 3 ist die Lageinformation abgespeichert und die Lageerfassungseinrichtung kann mittels einer nicht näher dargestellten Vergleichseinrichtung die abgespeicherte Lageinformation mit der tatsächlich vorliegenden Lageinformation im Aufbau 1 vergleichen und ein entsprechendes Signal S ausgeben.

In Fig. 2 ist eine erste Schicht 10 vorgesehen, in der ein metallischer Kontakt 4 vorgesehen ist. Daran grenzt eine zweite Schicht 20, in der ein weiterer metallischer Kontakt vorgesehen ist. Beide Kontakte stoßen an der Grenzschicht aneinander. Es kann sich hierbei um zwei Metallisierungsebenen eines elektronischen Bauelementes handeln oder auch Kontaktflächen zweier mit ihren Oberflächen gegeneinander aufliegenden Bauelemente.

Die Lageerfassungseinrichtung 2 ist nunmehr über eine Widerstandsmessung in der Lage, das Maß der Überlappung und damit eine Lageinformation für die Anordnung festzustellen. Wie Fig. 3 zu entnehmen ist, in der die Anordnung gemäß Fig. 2 in der Draufsicht dargestellt ist, kann es sich hierbei um eine Verschiebung in zwei Richtungen nämlich um eine erste Verschiebung V 1 und eine zweite Verschiebung V 2 handeln.

Bei einer derartigen Anordnung ist es zugegebenermaßen schwer, mittels Widerstandsmessung auf die Lageinformation zu schließen. Hierzu wäre es notwendig, sog. Vierpunktmessungen vorzunehmen.

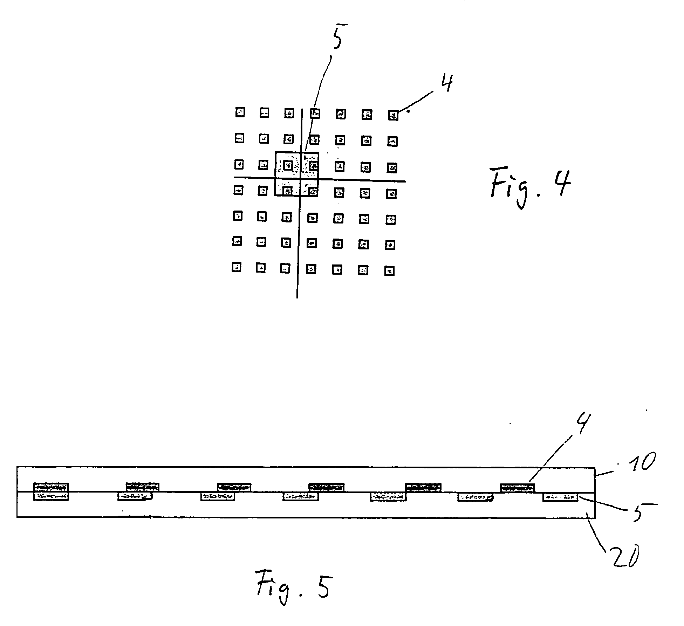

Einfacher gestaltet sich die Erlangung einer Lageinformation mit einer Anordnung gemäß Fig. 4. Hier sind eine Vielzahl von ersten Kontakten 4 vorgesehen, die einen flächenmäßig größeren zweiten Kontakt 5 kontaktieren. Durch bestimmen der ersten Kontakte 4, die den zweiten Kontakt 5 berühren, ist die Lageinformation erhältlich.

Vom Prinzip her ähnlich ist das Erlangen der Lageinformation mit einer Anordnung nach Fig. 4. Hier sind die ersten Kontakte 4 von der Größe ähnlich aufgebaut wie die zweiten Kontakte 5. Es ist jedoch ein unterschiedlicher Abstand zwischen den ersten Kontakten 4 und den zweiten Kontakten 5 vorgesehen. Somit ergibt sich bei einer Fehlausrichtung der ersten Schicht 10 gegenüber der zweiten Schicht 20, daß diese Fehlausrichtung durch bestimmen der Kontakte, die sich berühren, ähnlich einem Nonius feststellbar ist.

In Figur Punkt 6 ist ein zweites Ausführungsbeispiel dargestellt. Hierbei sind beispielhaft zwei hintereinander liegende Transistoren einer EE-PROM-Zelle 6 dargestellt. Entsprechend den vorhergehenden Ausführungsbeispielen ist hier eine zweite Struktur 5 vorgesehen, die das Gate dargestellt. Für die allgemein bekannte Funktion des Transistors in einer EEPROM- Zelle ist ein sogenannter "Buried Channel" 4 vorgesehen. Für die Funktionsweise des Transistors ist vorgesehen, daß der Buried Channel 4 an der gestrichelten Position angeordnet ist, so daß sich eine Kanallänge L ausbildet. Durch minimale Ungenauigkeiten bei der Herstellung kann sich ein Versatz D L zu seiner vorbestimmten Lage nach links oder rechts ergeben. Es ergibt sich somit eine effektive Kanallänge E mit E = L + D L oder E = L D L.

Diese effektive Kanallänge E ist meßbar und kann für einzelne Transistoren überwacht werden.

Nachfolgend wird die Arbeitsweise der zuvor erläuterten Individualanordnungen erläutert. Bei der ersten Inbetriebnahme der Anordnung stellt die Lageerfassungseinrichtung die Relativlage zwischen der ersten Struktur 4 und der zweiten Struktur 5 fest. Dabei ist es unerheblich, ob es sich hierbei um eine Widerstandsmessung, um das Erfassen von Einzelkontakten, oder die Bestimmung einer effektiven Kanallänge handelt. Die somit erfaßte Lageinformation wird in den Lagespeichereinrichtungen 3 einmalig abgespeichert. Während des Betriebs der Individualanordnung wird überprüft, ob die abgespeicherte Information mit der tatsächlich vorliegenden Anordnung übereinstimmt. Dies kann in der Weise erfolgen, daß bei jeder neuen Inbetriebnahme der Individualanordnung die Lageerfassungseinrichtung 2 die Relativlage zwischen der ersten Struktur 4 und der zweiten Struktur 5 ermittelt und mit der in der Lagespeichereinrichtung abgespeicherten Lageinformation vergleicht. Stimmt beides überein, kann beispielsweise vorgesehen sein, daß ein Signal S abgegeben wird, das anzeigt, daß keine Manipulationen an der Anordnung vorgenommen wurden. Alternativ kann vorgesehen sein, daß bei keinem Vorliegen einer Übereinstimmung ein Signal abgegeben wird, das die Manipulation an der Anordnung anzeigt.

Weiterhin ist es auch denkbar, daß auf die Lagespeichereinrichtung 3 verzichtet wird. In einem solchen Fall müßte bei der ersten Inbetriebnahme der Individualanordnung von einem externen Gerät die individuelle Lageinformation abgespeichert werden und sobald die Anordnung erneut betrieben wird, diese Information abgefragt werden.

Es ist leicht einzusehen, daß eine Vielzahl weiterer Ausgestaltungen denkbar sind, die hier nicht dargestellt sind aber dem vorliegenden Erfindungsgedanken entsprechen. Es hat sich gezeigt, daß die beschriebenen Strukturen je nach Ausdehnung der beteiligten Strukturen Genauigkeiten zur Erfassung der Lage im um bis Sub-um Bereich erbringen.

Es ist auch möglich, mehrere Strukturen zu kombinieren, so daß beispielsweise ein grober und ein feiner Nonius vorgesehen ist. Beim Entfernen einer Struktur ist es nicht möglich, die genaue Lage wieder nachzubilden.

## Patentansprüche

1. Individualanordnung mit einem Aufbau (1), der zumindest aus einer ersten Struktur (4) und einer zweiten Struktur (5) besteht, die zueinander ausgerichtet sind und einer Lageerfassungseinrichtung (2), die eine Relativlage zwischen der ersten Struktur (4) und der zweiten Struktur (5) erfaßt.

2. Individualanordnung nach Anspruch 1, bei der eine Lagespeichereinrichtung (3) vorgesehen ist, in der eine Information zur Relativlage zwischen der ersten Struktur (4) und der zweiten Struktur (5) gespeichert ist.

3. Individualanordnung nach Anspruch 2, bei der die Lageerfassungseinrichtung (2) eine Vergleichseinrichtung aufweist, die die in der Lagespeichereinrichtung (3) gespeicherte Information mit der erfaßten Relativlage vergleicht.

4. Individualanordnung nach einem der vorhergehenden Ansprüche, bei der die erste und die zweite Struktur (4,5) jeweils ein elektrisch leitender Kontakt sind, die sich zumindest teilweise überlappend berühren.

5. Individualanordnung nach einem der vorhergehenden Ansprüche, bei der die Kontakte der ersten Struktur (4) eine geringere Fläche aufweisen als die der zweiten Struktur (5)

6. Individualanordnung nach Anspruch 5, bei der die Relativlageinformation durch die Anzahl der Kontakte der ersten Struktur (4) bestimmt ist, die einen Kontakt der zweiten Struktur (5) berühren.

7. Individualanordnung nach einem der Ansprüche 1-4,
bei der die Kontakte der ersten Struktur in einer Reihe liegend mit einem ersten Abstand voneinander beabstandet sind und die Kontakte der zweiten Struktur in einer Reihe liegend mit einem zweiten Abstand voneinander beabstandet sind und der erste und zweite Abstand verschieden sind.

8. Individualanordnung nach einem der Ansprüche 1 bis 3, bei der die erste Struktur (4) ein sogenannter "Buried Channel" eines MOS-Transistors ist, und die zweite Struktur (5) das Gate dieses MOS-Transistors ist.

9. Individualanordnung nach Anspruch 8, bei der die Relativlageinformation eine Abweichung (D L) von einer vorbestimmten Lage ist.
